# EUROPEAN PATENT APPLICATION

(11) **EP 2 302 572 A1**
(43) Date of publication of application: **30.03.2011**
(21) Application number: 09012294.6
(22) Date of filing: 28.09.2009
(51) Int. Cl.: G06Q 10/00, H02J 3/14

(54) **A device and method for handling energy consumption**

(71) Applicant: SIEMENS AKTIENGESELLSCHAFT, 80333 München (DE)
(72) Inventor: Malaguti, Daria, 81541 München (DE)

(57) **Abstract**

The present invention refers to a device configured to measure quantity of energy used by a set of energy consuming devices. The device comprises: energy price determining module determining energy prices; data management module managing data concerning at least one energy consuming device of said set of energy consuming devices; device management module managing the set of energy consuming devices, wherein, if the energy price determining module determines that current energy price is under a first price level, the device management module is configured to: determine at least one energy consuming device of the set of energy consuming devices, which is switched off and meets criteria for switching on, by use of the data; switch on the at least one energy consuming device determined. The present invention provides improved handling of energy produced/provided by energy providers and is usable with regard to various energy providing entities and energy consuming systems.

## Description

### FIELD OF THE INVENTION

The present invention refers to a device or apparatus configured to measure the quantity of energy consumed by a set of energy consuming devices, a method for handling energy consumption a computer program product configured to perform the method, and a data carrier comprising the computer program product. Further, the present invention refers to a data configuring entity, a method for configuring data, a computer program product configured to perform the method, and a data carrier comprising the computer program product.

### BACKGROUND OF THE INVENTION

Energy providers often have constantly changing prices for energy they offer. These energy prices depend on the time the energy is supplied to the consumer. Further, the energy prices depend on the current demand for energy, i.e., on the current consumption of energy.

However, energy providers do not offer variable prices to the small private energy consumers, but mostly fixed prices contracts. Therefore, the small consumers pay a fixed price for their energy consumption even when the market prices may be lower.

It is known, that the energy prices of the energy providers often depend on the current energy market situation, i.e., on the current energy demand which varies in dependence of several criteria. Thus, for example, in a hot summer time or in a cold winter time more energy is consumed than in a cool summer time or in a warm winter time. With decrease of energy consumption, also the energy demand decreases. In such periods, the energy providers have to find appropriate means for storing energy produced and/or to reduce the production and providing of energy. Both actions are, however, cost sensitive. Reduction of the production of energy has an additional disadvantage. If the energy demand increases, it may happen that the energy provider does not have enough energy to be provided to its energy consumers.

To avoid costs related to the storage of the energy produced and/or to reduction of the production of energy, negative costs have been introduced. This means that if the energy providers produce too much energy compared to the energy demand, the energy providers have to pay money to put the energy on the network. For energy providers, it may be cheaper to pay energy consumers to turn on their energy consuming devices and/or systems or to reduce the production of energy.

However, as energy consumers do not have the ability of consequent monitoring of the energy market prices, they often do not realize or identify times favourable for operating of certain devices or appliances. This in turn means that energy producers have to accept the high costs for storage of energy produced or have to decrease the production or generating of energy being also a cost sensitive action.

Thus, there is a need for an improved system or methodology for controlling the consumption of energy.

### SUMMARY OF THE INVENTION

An object of the present invention is to provide an improved handling of energy produced and/or provided by energy providers.

This object is achieved by a device configured to measure a quantity of energy used by a set of energy consuming devices comprising the features according to claim 1, a method for handling energy produced and/or provided comprising the features according to claim 14, a computer program product comprising the features according to claim 16, a data carrier comprising the features according to claim 17, a data configuring entity comprising the features according to claim 18, a method for configuring data comprising the features according to claim 19, a computer program product comprising the features according to claim 21, and/or a data carrier comprising the features according to claim 22.

Further embodiments of the present invention are provided by the corresponding dependent claims.

The object of the present invention is achieved by a device configured to measure the quantity of energy used or consumed by a set of energy consuming devices, wherein the device comprises:
- an energy price determining module configured to determine energy prices;
- a data management module configured to manage data concerning at least one energy consuming device of said set of energy consuming devices; and
- a device management module configured to manage the set of energy consuming devices, wherein, if the energy price determining module determines that a current energy price is under a first price level, the device management module is configured to:
- determine at least one energy consuming device of the set of energy consuming devices, which is switched off and meets criteria for switching on, by use of the data; and
- switch on the at least one energy consuming device determined.

In this way, an improved handling of energy produced and/or provided by energy providers is enabled. In particular, an effective consumption of energy by devices or entities consuming energy is enabled.

Moreover, the improved handling of energy is performed in an automatic way without the requirement of intervention of a human energy provider or consumer.

Furthermore, for energy provider entities an effective handling of energy which has been produced extra or additionally is enabled. By utilizing the device of the present invention, it is ensured that at least a certain amount of the energy produced extra or additionally will be consumed. Thus, costs arising from saving of energy produced extra or additionally and/or from reducing of the amount of energy to be produced can be minimized.

Moreover, by use of the present invention an optimal utilization of energy consuming devices is enabled.

According to an embodiment of the present invention, the current energy price is below a first price level if:
- the current energy price is a negative price; and/or
- the current energy price is less than a first threshold value.

In this way, an optimal utilization of the present invention is enabled.

According to an embodiment of the present invention, if the energy price determining module determines that the current energy price is over a second price level, the device management module is configured to:
- determine at least one energy consuming device of the set of energy consuming devices, which is switched on and meets criteria for switching off, by use of the data; and
- switch off the at least one determined energy consuming device.

Thus, according to the present invention besides the switching on of devices also an effective and cost-sensitive switching off of devices is enabled.

According to an embodiment of the present invention, the current energy price is over a second price level if:
- the current energy price is a positive price; and/or
- the current energy price is higher than a second threshold value.

The energy price is positive if it is not negative, i.e., if the energy provider or the energy provider entity respectively does not have to pay money for the extra energy production.

According to an embodiment of the present invention, if the at least one energy consuming device, which is switched on, meets criteria for switching off and has not completed a task to be performed by the at least one energy consuming device, the device management module is configured to switch off the at least one energy consuming device after the at least one energy consuming device has finished the task.

Thus, a context-sensitive management of energy consuming devices is enabled, wherein the environment, functionality, and/or general use of the energy consuming devices is considered in an effective way.

According to an embodiment of the present invention, the data management module is configured to receive further data concerning at least one energy consuming device of said set of energy consuming devices from a data configuration entity configured to configure the data managed by the data management module.

Thus, an always adaptable handling of management of energy consuming devices and of handling of energy is enabled by the present invention.

According to an embodiment of the present invention, the data management module is configured to modify the data managed by the data management module after the receiving of the further data.

According to an embodiment of the present invention, the data concerning at least one energy consuming device of said set of energy consuming devices comprises at least one of the following:
- a safety information specifying whether the at least one energy consuming device is a device to be used safely;
- a specification of times when operation of the at least one energy consuming device can be started and/or shut down; and/or
- a specification whether a starting of the operation of the at least one energy consuming device is required.

Here, it has to be noted that the data concerning at least one energy consuming device of said set of energy consuming devices may comprise also further appropriate information. Thus, the present invention can be adapted in a flexible way also with regard to further aspects arising with regard to the subject matter of the present invention.

According to an embodiment of the present invention, the energy price determining module has a connection to at least one energy provider entity and is configured to determine the prices of energy by use of the connection.

According to an embodiment of the present invention, the connection is an internet connection.

According to an embodiment of the present invention, the energy is electrical energy, the at least one energy consuming device is an electric energy consuming device, and/or the device is an electricity meter.

According to an embodiment of the present invention, the device management module is configured to switch an energy consuming device on and/or off by use of a switch entity configured to switch on and/or off the energy consuming device.

According to an embodiment of the present invention, the switch entity is connected to the device and to the energy consuming device, wherein the device management module is configured to switch the energy consuming device on and/or off by use of the connection between the device and the switch entity.

The object of the present invention is achieved by a method, comprising:
- determining of a current energy price; and
- if the current energy price is below a first price level:
- determining of at least one energy consuming device of the set of energy consuming devices, which is switched off and meets criteria for switching on, by use of data concerning at least one energy consuming device of said set of energy consuming devices; and
- switching on the at least one determined energy consuming device.

According to an embodiment of the present invention, the method is performed by the device described above and explained in more detail below.

In particular, the method is configured to perform steps which correspond to the actions of said device and/or of its modules or entities.

The object of the present invention is achieved also by a computer program product comprising a code, the code being configured to implement and/or perform the above mentioned method.

According to an embodiment of the present invention, the code is stored on a data carrier. According to a further embodiment of the present invention, the computer program product is configured to perform said method when the computer program product is executed by a processing unit such as a processor. According to an embodiment of the present invention, the processing unit is a processing unit of said device as described above and explained in more detail below.

Further, the object of the present invention is achieved by a data carrier comprising said computer program product.

The object of the present invention is achieved by a data configuring entity, configured to:
- configure data concerning at least one energy consuming device of a set of energy consuming devices; and
- transmit the configured data to a device, configured to measure a quantity of energy used by the set of energy consuming devices, sketched above and described in more detail below.

Further, the object of the present invention is achieved by a method, comprising:
- configuring of data concerning at least one energy consuming device of a set of energy consuming devices; and
- transmitting of the configured data to a device, configured to measure a quantity of energy used by the set of energy consuming devices, according to at least one of the claims 1 to 13.

According to an embodiment of the present invention, the method is performed by the data configuring entity.

In particular, the method is configured to perform steps which correspond to the actions of said data configuring entity and/or of its modules or entities.

The object of the present invention is achieved also by a computer program product comprising a code, the code being configured to implement and/or perform said method.

According to an embodiment of the present invention, the code is embodied on a data carrier. According to a further embodiment of the present invention, the computer program product is configured to perform said method when the computer program product is executed by a processing unit like a processor, for example. According to an embodiment of the present invention, the processing unit is a processing unit of said data configuring entity.

Further, the object of the present invention is achieved by a data carrier comprising said computer program product.

Thus, an improved system providing and for consumption of provided energy is enabled. In particular, the present invention enables an improved handling of energy produced and/or provided by energy providers or energy provider entities respectively.

### BRIEF DESCRIPTION OF THE DRAWINGS

The present invention will be more clearly understood from the following description of preferred embodiments of the invention read in conjunction with the attached figures in which:
Fig. 1 shows an exemplary arrangement of devices or entities configured or arranged to handle produced and/or provided energy according to an embodiment of the present invention;
Fig. 2 shows a device configured to measure a quantity of energy used or consumed by a set of energy consuming devices and arranged according to an embodiment of the present invention;
Fig. 3 shows actions or steps of a method for handling energy, produced and/or provided by energy providers, according to an embodiment of the present invention; and
Fig. 4 shows further actions or steps of the method for handling energy, produced and/or provided by energy providers, according to an embodiment of the present invention.

### DETAILED DESCRIPTION OF EMBODIMENTS

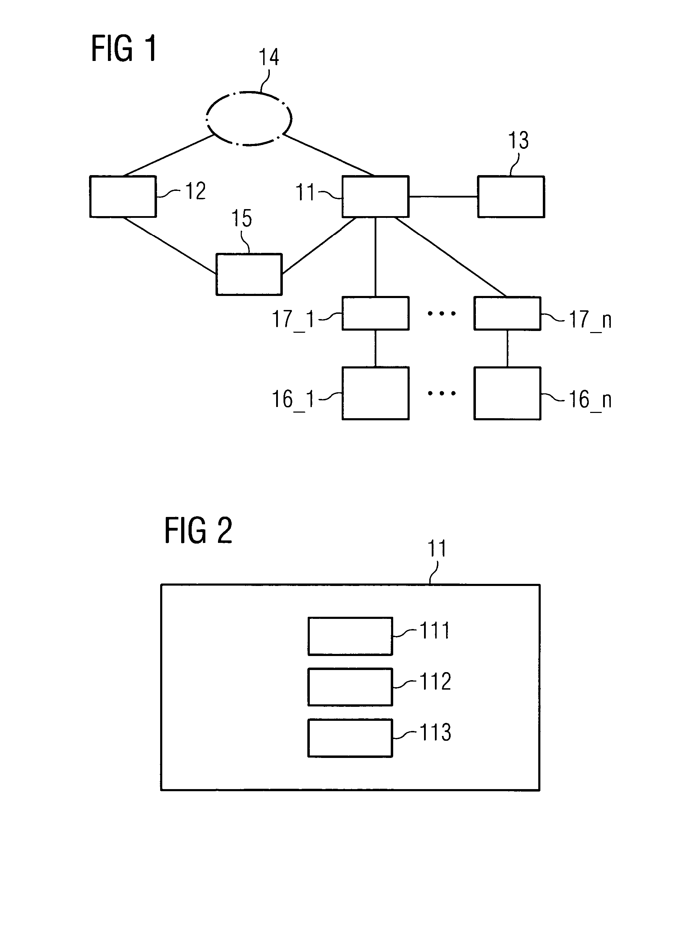

Fig. 1 shows an exemplary arrangement of devices or entities configured or arranged to handle produced and/or provided energy according to an embodiment of the present invention.

Here, it has to be noted that the present invention is not restricted to the arrangement of devices or entities according to the present embodiment of Fig. 1 only. The present invention allows also further appropriate arrangements of devices or entities enabling handling of produced and/or provided energy according to the present invention.

An entity 12 represents an energy provider entity configured for providing and offering energy. According to a further embodiment of the present invention, the energy provider entity 12 is also configured to manage or handle the production or generation of the energy. According to the present embodiment, the energy provider entity 12 is a computing device such as a computer or a (hardware and/or software) module or entity of a computer for example. Here, several appropriate ways of implementing the energy provider entity 12 are possible (e.g., the energy provider entity 12 can be also a system or arrangement of appropriate computing devices, entities, or modules).

Entity 15 represents an entity, a system, a device, an arrangement, or a network configured to generate, store, deliver and/or provide the energy generated or produced. In the following, this entity 15 will be referred to as energy network entity. According to a further embodiment of the present invention, the energy network entity 15 is, e.g., a power network which generates, stores, delivers and/or provides electricity. Here, several appropriate ways of implementing the energy network entity 15 are possible.

The line connecting the energy provider entity 12 and the energy network entity 15 indicates that the energy provider entity 12 is configured to manage or handle providing, offering, and/or producing of the energy generated, stored, delivered and/or provided by the energy network entity 15.

Entity 11 represents a device configured to measure the quantity of energy used or consumed by a set of energy consuming devices 16_1 to 16_n, wherein the management of production and/or providing of the energy are performed by the energy provider entity 12 and the delivering of the energy is performed by the energy network entity 15. This relation between the entities or devices is shown in Fig. 1 by use of corresponding lines between the entities or devices. In the following, the device or entity 11, measuring the quantity of energy used or consumed, will be referred to as a meter. According to a further embodiment of the present invention, the meter 11 is, for example, an electricity meter configured to count or measure the amount of electricity used by at least one of the electrical devices or appliances 16_1 to 16_n.

As denoted above, the entities 16_1 to 16_n are devices or appliances consuming the energy. Particularly, the devices or appliances 16_1 to 16_n require, consume, or use the energy for operating and, thus, for performing the work or tasks the devices or appliances 16_1 to 16_n have been arranged or configured for. According to an embodiment, the energy used or consumed by the devices or appliances 16_1 to 16_n is electrical power and the devices or appliances 16_1 to 16_n are electrical devices or appliances 16_1 to 16_n, e.g., a washing machine, a charging device, an electric heating etc.

According to the present embodiment, between the meter 11 (or energy consumer network in general) and each of the devices or appliances 16_1 to 16_n a corresponding switch 17_1 to 17_n is arranged. Each of the switches 17_1 to 17_n is configured to switch on and/or off the device or appliance 16_1 to 16_n to which it is connected. Further, each of the switches 17_1 to 17_n can be configured to provide information of whether the corresponding device or appliance 16_1 to 16_n to which it is connected is working or not and/or of how much power the corresponding device or appliance 16_1 to 16_n is consuming.

According to the present embodiment, the meter 11 has a connection to a communications network 14 such as the internet and the capability to determine and receive information data concerning energy prices and negative prices from the energy provider entity 12 via the communications network 14.

The meter 11 can be configured to determine and receive the information concerning the energy prices continuously. Further, the meter 11 can be configured to determine and receive the information concerning the energy prices for a certain time frame and/or current energy prices.

Thus, for example, the energy provider entity 12 can transmit to the meter 11 the following message: "Negative prices between 8am and 10am on March 11, 2009", to inform the meter 11 at which time energy is provided by the energy provider entity 12 for a negative price. I.e., after receiving this information the meter 11 knows that the best or favourable time for consuming energy will be between 8am and 10am on March 11, 2009, since "negative price" means that the consumer of the energy can consume energy for a cheaper price or even receive money for consuming energy from the energy provider or energy provider entity 12 respectively. According to the present embodiment, the meter 11 is configured to manage the consumption or use of energy by the energy consuming devices 16_1 to 16_n such that costs arising in connection with the consumption or use of energy are as low as possible. Thus, according to the present embodiment, the meter 11 is configured to manage the consumption of energy by the energy consuming devices 16_1 to 16_n.

To perform the energy management according to the present embodiment, the meter 11 comprises or gets information how much energy it can utilize during a given time frame. The meter 11 receives or gets this knowledge from configuration data or data concerning at least one energy consuming device 16_1 to 16_n respectively. This data is provided to the meter 11 by a data configuring entity or device 13. By use of this information data, the meter 11 can inform the energy provider entity of the amount or quantity of energy intended to be used by the meter 11 or the energy consuming devices 16_1 to 16_n respectively.

Thus, for example, the meter 11 can transmit to the energy provider entity 12 the following message: "I will use 625 kilowatt from 8 am to 10 am" or "I will use 300 kilowatt from 8 am to 8:35 am".

By transmitting the information indicating the amount or quantity of energy intended to be consumed or used for a period of time to the energy provider entity 12 by the meter 11, the energy provider entity 12 is enabled to perform a better and more predictable management of providing and/or producing of energy. Additionally, costs arising in connection with dealing with overproduced or too much available energy can be reduced and the efficiency is increased.

As mentioned above, a data configuring entity or device 13 for performing a configuration of the meter 11 is provided according to the present embodiment. The data configuring entity or device 13 can be, for example, a computing device or entity like a computer or a hardware and/or software entity or module of a computing device or entity. According to a further embodiment, the data configuring entity or device 13 is a user or consumer interface installed on a pc or a smart phone. Here, it has to be noted that several appropriate ways of implementing of the data configuring entity or device 13 are possible according to the present invention.

According to the present embodiment, the data configuring entity or device 13 is configured to create a list or data comprising information concerning at least one of the energy consuming devices or appliances 16_1 to 16_n. The data configuring entity or device 13 can be configured to specify or to code in this list or data which of the energy consuming devices or appliances 16_1 to 16_n can be used safely. Thus, after transmitting this list or data to the meter 11 by the data configuring entity or device 13, the meter 11 has knowledge of such energy consuming devices or appliances 16_1 to 16_n which need human surveillance (e.g. oven) and which have to be switched on only at time periods the corresponding human controller is present and can monitor the corresponding energy consuming devices or appliances 16_1 to 16_n to be operated safely.

The energy consuming devices or appliances 16_1 to 16_n can be, for example, air conditioning or washing machines in private households or huge machines of industrial customers etc.

According to the present embodiment, the data configuring entity or device 13 is configured to perform at least one of the following: to display the existing configuration data or data concerning at least one energy consuming device or appliance 16_1 to 16_n stored in and/or managed by the meter 11; and to modify the existing data stored in and/or managed by the meter 11. Here, modifying comprises adding of new data, changing of existing data, and/or removing of data or parts of data.

According to the present embodiment, the data configuring entity or device 13 is or can be interfaced with an electronic calendar entity or module (e.g., calendar of Microsoft Outlook). Thus, the data configuring entity or device 13 is configured to collect data indicating such energy consuming devices or appliances 16_1 to 16_n which should be switched on at given days and/or periods of time only. Then, the data configuring entity or device 13 provides this data to the meter 11 which also can be interfaced with an electronic calendar entity or module and which is thus enabled to perform a corresponding management of switching on and/or off of energy consuming devices or appliances 16_1 to 16_n by use of this data. I.e. the meter 11 is the configured to operate the energy consuming devices or appliances 16_1 to 16_n in line with times predetermined for operation of the energy consuming devices or appliances 16_1 to 16_n at the data configuring entity or device 13.

For example a washing machine might be automatically started by the meter 11 only after 6 pm, because this is the time when it is full and it would not make sense to start it and waste water before 6 pm as at that time the washing machine is empty.

Furthermore, energy consuming devices or appliances 16_1 to 16_n of a private household are not to be started or switched on at a time when the residents are for example on holiday.

As already mentioned above, according to the present embodiment, the meter 11 (or energy consumer network in general) and each of the energy consuming devices or appliances 16_1 to 16_n are connected via a corresponding switch 17_1 to 17_n.

Whenever the meter 11 receives from the energy provider entity 12 the information that the energy has a negative price or is below a certain (predetermined) threshold value, the meter 11 is configured to go through the list or data of energy consuming devices or appliances 16_1 to 16_n, selected and provided by the data configuring entity or device 13, and to check whether at least one of the energy consuming devices or appliances 16_1 to 16_n can be switched on or not. In some cases, some of such energy consuming devices or appliances 16_1 to 16_n can already be on. In such cases, switching on of such energy consuming devices or appliances 16_1 to 16_n which are already on is done and is not performed by the meter 11.

In case that the detected, determined, or selected energy consuming device or appliance 16_1 to 16_n to be switched on is off, according to the present embodiment the meter 11 is configured to transmit to the corresponding switch 17_1 to 17_n a message or signal indicating that the corresponding energy consuming device or appliance 16_1 to 16_n has to be switched off by the switch 17_1 to 17_n.

If data concerning the corresponding energy consuming device or appliance 16_1 to 16_n indicates that the corresponding energy consuming device or appliance 16_1 to 16_n can be switched off at any time, according to the present embodiment, the meter 11 is configured to transmit to the switch 17_1 to 17_n a message or a signal to switch off the corresponding energy consuming device or appliance 16_1 to 16_n as soon as the meter 11 determines or detects that: the energy price has become positive; the energy price is over the (predetermined) threshold value; and/or the energy price is over a further (predetermined) threshold value.

Some of the energy consuming devices or appliances 16_1 to 16_n can be switched on and/or off at any time, e.g., air conditioning etc. Other energy consuming devices or appliances 16_1 to 16_n switch off automatically when they have finished their task, e.g. washing machine etc.

Fig. 2 shows an arrangement of the meter 11 according to an embodiment of the present invention.

According to the present embodiment, the meter 11 comprises an energy price determining module 111, a data management module 112, and a device management module 113.

Here, it has to be noted that the meter 11 can comprise also further modules or entities and is not restricted to the exemplary arrangement of Fig. 2.

The energy price determining module 111 is configured to determine energy prices. The determining of the energy prices is performed by communicating with an energy provider entity such as the energy provider entity 12 of Fig. 1.

The data management module 112 is configured to manage data concerning at least one energy consuming device like the energy consuming devices 16_1 to 16_n of Fig. 1. In particular, the data management module 112 is configured to receive the corresponding (configuration) data from a data configuring entity or device like the data configuring entity or device 13 of Fig. 1, for example. Further, the data management module 112 is configured to modify or replace existing data by use of the data received from the data management module. Here, some data entries or parts can be added, removed and/or changed. In particular, the data management module 112 is configured to perform data management as described above with regard to communication and interworking between the meter 11 and the data configuring entity or device 13.

The device management module 113 is configured to manage the energy consuming devices. In particular, the device management module 113 is configured to manage operating of the energy consuming devices, i.e., switching on and/or off of the energy consuming devices. If the energy price determining module 111 determines that a current energy price is below a first price level (i.e. the current energy price is a negative price or is less than a certain threshold value), the device management module 113 is configured to determine an energy consuming device of the set of energy consuming devices, which is switched off and meets criteria for switching on, by use of the data managed by the data management module 112 and to switch on the determined energy consuming device. Here it has to be noted that the device management module 113 may determine also several energy consuming devices or at least one energy consuming device respectively for switching on.

In particular, the device management module 113 manages operating of the energy consuming devices, i.e., switching on and/or off of the energy consuming devices.

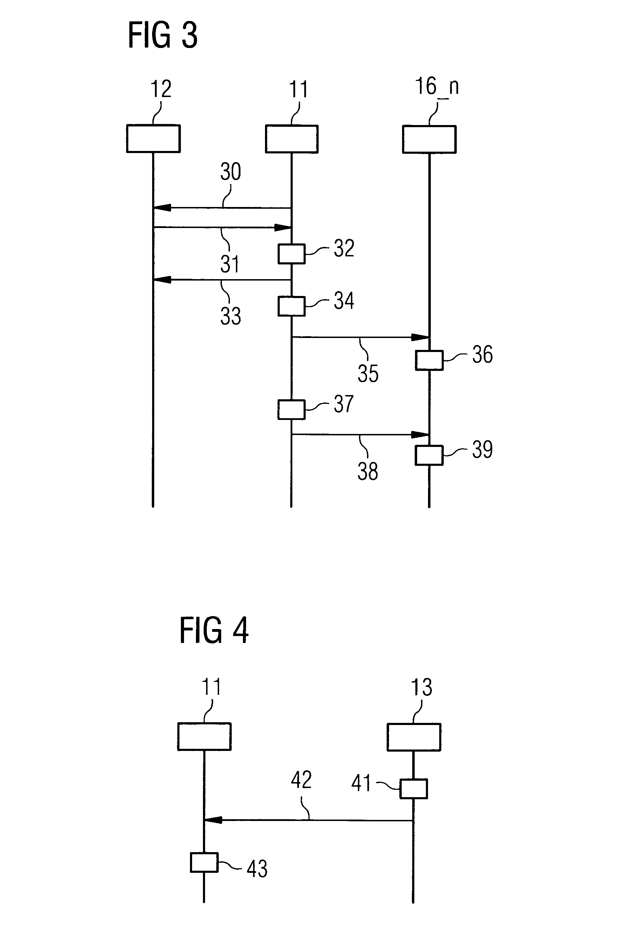

Fig. 3 shows actions or steps 30 to 39 of a method for handling energy, produced and/or provided by energy providers, according to an embodiment of the present invention. In particular the actions or steps 30 to 39 are shown in connection with the entities or devices of Fig. 1, wherein the meter 11 can be arranged as described with regard to Fig. 2.

According to the present embodiment, in step 30, the meter 11 (e.g., the energy price determining module 111) transmits to the energy provider entity 12 a request for providing data concerning energy prices of the energy provider entity 12. In step 31, the energy provider entity 12 transmits the requested energy price information data to the meter 11 (e.g., the energy price determining module 111). In step 32, the meter 11 (e.g., the device management module 113) analyzes the received energy price information by use of data concerning energy consuming devices 16_1 to 16_n, operation of which is managed by the meter 11. In step 33, the meter 111 (e.g., the energy price determining module 111) transmits to the energy provider entity 12 a message or information concerning the amount or quantity of energy intended to be used or consumed during at least one certain data period. This information or content of the message can be generated, e.g., by the device management module 113 of the meter 11.

Here, it has to be noted that the steps or actions 30 to 33 can be performed continuously, e.g., in predetermined time periods etc. Thus, the meter 11 is always aware of the actual and current energy prices of the energy provider entity 12.

In step 34, the meter 11 (e.g., the device management module 113) analyzes the current situation with regard to current energy price and the energy consuming devices 16_1 to 16_n on the basis of price information data received by the meter 11 (e.g., the energy price determining module 111) from the energy provider entity 12 and by use of the data concerning the energy consuming devices 16_1 to 16_n (managed by the data management module 112).

As already pointed out above, if the current energy price is a negative price and/or is less than a certain (predetermined) threshold value, the meter 11 (e.g., the device management module 113) detects such energy consuming devices 16_1 to 16_n, which are switched off and can be switched on. For detecting of appropriate energy consuming devices 16_1 to 16_n, the meter 11 (e.g., the device management module 113) can use certain criteria for switching on an energy consuming device 16_1 to 16_n. As mentioned above, the criteria can specify that an appropriate energy consuming device 16_1 to 16_n should be switched on and/or off in line with time periods defined as being desirable time periods for operating the energy consuming device 16_1 to 16_n. Further, the criteria can specify that, if the energy consuming device 16_1 to 16_n is a device to be operated safely, the energy consuming device 16_1 to 16_n has to be operated only if a safe operation of the energy consuming device 16_1 to 16_n is ensured at the current time period. Here, also further appropriate criteria can be defined or specified according to the present invention. In general, the criteria provide a mechanism of verifying or checking whether it is indicated or allowable to switch on the corresponding energy consuming device 16_1 to 16_n.

In step 35, the meter 11 (e.g., the device management module 113) switches on the determined energy consuming devices 16_1 to 16_n. In Fig. 3, the transmitting 35 of a corresponding message or signal is shown exemplary only with regard to the energy consuming device 16_n as the determined energy consuming device 16_1 to 16_n. As already explained above, the step 35 can be performed via corresponding switches 17_1 to 17_n.

In step 36, the corresponding energy consuming devices 16_1 to 16_n (in Fig. 3, the energy consuming device 16_n) are (is) switched on.

In step 37, the meter 11 (e.g., the device management module 113) analyzes the current situation with regard to current energy price and the energy consuming devices 16_1 to 16_n as described with regard to step 34.

However, here, in step 37 it is detected that the current energy price is a positive price and/or higher than the (predetermined) threshold value of a further threshold value.

Thus, in step 37, the meter 11 (e.g., the device management module 113) detects such energy consuming devices 16_1 to 16_n, which are switched on and can be switched off. For the detecting of appropriate energy consuming devices 16_1 to 16_n, the meter 11 (e.g., the device management module 113) can use certain criteria for switching off an energy consuming device 16_1 to 16_n. As mentioned above, the criteria can specify that an energy consuming device 16_1 to 16_n should be switched off as soon it has completed its task and/or in line with time periods defined as being desirable time periods for operating the energy consuming device 16_1 to 16_n. Here, also further appropriate criteria can be defined or specified according to the present invention. In general, the criteria provide a mechanism of verifying or checking whether it is indicated or allowable to switch off the corresponding energy consuming device 16_1 to 16_n. For example, here may be time periods at which an energy consuming device 16_1 to 16_n (e.g., a heating installation etc.) should not be switched off. If the current time period corresponds to such a time period, it is not allowable to switch off the corresponding energy consuming device 16_1 to 16_n.

In step 38, the meter 11 (e.g., the device management module 113) switches off the determined energy consuming devices 16_1 to 16_n. In Fig. 3, the transmitting 38 of a corresponding message or signal is shown with regard to the energy consuming device 16_n as the determined energy consuming device 16_1 to 16_n. As already explained above, the step 38 can be performed by means of corresponding switches 17_1 to 17_n.

In step 39, the corresponding energy consuming devices 16_1 to 16_n (in Fig. 3, the energy consuming device 16_n) are (is) switched off.

Here, it has to be noted that the steps 34 and 37 (and then, if appropriate, the subsequent steps 35, 36, 38, 39) can be performed continuously, e.g., periodically etc.

Fig. 4 shows further actions or steps 41 to 43 of the method for handling energy, produced and/or provided by energy providers, according to an embodiment of the present invention. In particular, in Fig. 4 actions or steps 41 to 43 concerning configuring of the meter 11 are shown.

In step 41, the data configuring entity or device 13 prepares data for configuring the meter 11 as described above. The data configuring entity or device 13 can create new configuration data or modify current configuration data as currently managed or maintained by the meter 11, wherein the configuration data concerns the energy consuming devices 16_1 to 16_n managed by the meter 11.

In step 42, the data configuring entity or device 13 transmits the new or modified configuration data to the meter 11. In the meter 11, this data can be provided to the data management module 112 for updating or replacing the data managed by the data management module 112. The updating or replacing of the data is performed in step 43 in the meter 11.

Thus, the present invention refers to a device configured to measure the quantity of energy used by a set of energy consuming devices. The device comprises an energy price determining module determining energy prices and a data management module managing data concerning at least one energy consuming device of said set of energy consuming devices. Further, a device management module is provided for managing the set of energy consuming devices. If the energy price determining module determines that the current energy price is below a first price level, the device management module is configured to determine an energy consuming device of the set of energy consuming devices, which is switched off and meets criteria for switching on, by use of the data and to switch on the at least one determined energy consuming device. The present invention provides an improved handling of energy produced and/or provided by energy providers and is usable with regard to various energy providing entities and energy consuming systems.

In this way, the problem of providing improved handling of energy produced and/or provided by energy providers is solved by increasing the power consumption to compensate the extra production of energy. According to the present invention, e.g., negative prices or at least prices tending to become negative prices can be reviewed and the energy provider entity, which manages handling of energy which has been produced in excess, does not have to bear high costs for the extra energy put on the network by the energy provider entity.

According to the present invention, a meter comprises features which can be utilized by households and industrial energy consumers.

In particular, the energy provider can notify energy meters according to the present invention about negative prices by use of communications networks like internet, for example, for a given time frame or period.

Further, the meter of the present invention can be able to notify the energy provider that it is going to consume extra energy in the given time frame or period.

Furthermore, a customer device like a data configuring entity or comprising a data configuring entity can configure the meter to switch on and/or off energy consuming devices or appliances of choice at any time.

Moreover, the meter is able to switch on and/or off the configured energy consuming devices or appliances at any time automatically and without human intervention.

Additionally, the energy provider entity does not have to pay money for extra energy produced. The consumer of energy can use extra energy cost-effective or for free or even get money from the energy providing entity.

While embodiments and applications of this invention have been shown and described above, it should be apparent to those skilled in the art, that many more modifications (than mentioned above) are possible without departing from the inventive concept described herein. The invention, therefore, is not restricted except in the spirit of the appending claims. Therefore, it is intended that the foregoing detailed description should be regarded as illustrative rather than limiting.

## Claims

1. A device (11) configured to measure a quantity of energy consumed by a set of energy consuming devices (16_1 to 16_n), wherein the device (11) comprises:
- an energy price determining module (111) configured to determine energy prices;
- a data management module (112) configured to manage data concerning at least one energy consuming device (16_1 to 16_n) of said set of energy consuming devices; and
- a device management module (113) configured to manage the set of energy consuming devices (16_1 to 16_n), wherein, if the energy price determining module (111) determines that a current energy price is below a first price level, the device management module (113) is configured to:
- determine at least one energy consuming device (16_1 to 16_n) of the set of energy consuming devices, which is switched off and meets criteria for switching on, by use of the data; and
- switch on the at least one determined energy consuming device (16_1 to 16_n).

2. The device (11) according to claim 1, wherein the current energy price is below the first price level if:
- the current energy price is a negative price; and/or
- the current energy price is less than a first threshold value.

3. The device (11) according to at least one of the preceding claims, wherein, if the energy price determining module (111) determines that the current energy price is higher than a second price level, the device management module (113) is configured to:
- determine at least one energy consuming device (16_1 to 16_n) of the set of energy consuming devices, which is switched on and meets criteria for switching off, by use of the data; and
- switch off the at least one determined energy consuming device (16_1 to 16_n).

4. The device (11) according to claim 3, wherein the current energy price is higher than a second price level if:
- the current energy price is a positive price; and/or
- the current energy price is greater than a second threshold value.

5. The device (11) according to claim 3 or 4, wherein if the at least one energy consuming device (16_1 to 16_n), which is switched on, meets criteria for switching off and has not completed a task to be performed by the at least one energy consuming device (16_1 to 16_n), the device management module (113) is configured to switch off the at least one energy consuming device (16_1 to 16_n) after the at least one energy consuming device (16_1 to 16_n) has finished the task.

6. The device (11) according to at least one of the preceding claims, wherein the data management module (112) is configured to receive further data concerning at least one energy consuming device (16_1 to 16_n) of said set of energy consuming devices from a data configuring entity (13) configured to configure the data managed by the data management module (112).

7. The device (11) according to claim 6, wherein the data management module (112) is configured to modify the data managed by the data management module (112) after receiving of the further data.

8. The device (11) according to at least one of the preceding claims, wherein the data concerning at least one energy consuming device (16_1 to 16_n) of said set of energy consuming devices comprises at least one of the following:
- a safety information specifying whether the at least one energy consuming device (16_1 to 16_n) is a device to be used safely;
- a specification of times when operating of the at least one energy consuming device (16_1 to 16_n) can be started and/or shut down; and/or
- a specification whether a starting of the operating of the at least one energy consuming device (16_1 to 16_n) is required.

9. The device (11) according to at least one of the preceding claims, wherein the energy price determining module (111) has a connection to at least one energy provider entity (12) and is configured to determine the prices of energy by use of the connection.

10. The device (11) according to claim 9, wherein the connection is an internet (14) connection.

11. The device (11) according to at least one of the preceding claims, wherein the energy is electrical energy, the at least one energy consuming device (16_1 to 16_n) is an electric energy consuming device, and/or the device (11) is an electricity meter.

12. The device (11) according to at least one of the preceding claims, wherein the device management module (113) is configured to switch an energy consuming device (16_1 to 16_n) on and/or off by use of a switch entity (17_1 to 17_n) configured to switch on and/or off the energy consuming device (16_1 to 16_n).

13. The device (11) according to claim 12, wherein the switch entity (17_1 to 17_n) is connected to the device (11) and to the energy consuming device (16_1 to 16_n) and wherein the device management module (113) is configured to switch the energy consuming device (16_1 to 16_n) on and/or off by use of the connection between the device (11) and the switch entity (17_1 to 17_n).

14. A method for handling energy consumption, comprising the steps of:
- determining (30 to 32) of a current energy price; and
- if the current energy price is under a first price level:
- determining (34) of at least one energy consuming device (16_1 to 16_n) of the set of energy consuming devices, which is switched off and meets criteria for switching on, by use of data concerning at least one energy consuming device (16_1 to 16_n) of said set of energy consuming devices; and
- switching on (35, 36) the at least one determined energy consuming device (16_1 to 16_n).

15. The method of claim 14, wherein the method is performed by a device (11) according to at least one of claims 1 to 13.

16. A computer program product comprising a code, the code being configured to perform a method according to claim 14 or 15.

17. A data carrier comprising a computer program product according to claim 16.

18. A data configuring entity (13), adapted to:
- configure data concerning at least one energy consuming device (16_1 to 16_n) of a set of energy consuming devices; and
- transmit the configured data to a device (11), configured to measure quantity of energy used by the set of energy consuming devices (16_1 to 16_n), according to at least one of the claims 1 to 13.

19. A method for handling energy consumption, comprising the steps of:
- configuring (41) of data concerning at least one energy consuming device of a set of energy consuming devices; and
- transmitting (42) of the configured data to a device (11), adapted to measure a quantity of energy consumed by the set of energy consuming devices (16_1 to 16_n), according to at least one of the claims 1 to 13.

20. The method according to claim 19, wherein the method is performed by a device (13) according to claim 18.

21. A computer program product comprising a code, the code being configured to perform a method according to claim 19 or 20.

22. A data carrier comprising a computer program product according to claim 21.
